# EUROPEAN PATENT APPLICATION

(11) **EP 4 578 711 A1**
(43) Date of publication of application: **02.07.2025**
(21) Application number: 23896841.6
(22) Date of filing: 29.11.2023
(51) Int. Cl.: B60L 53/126, H01M 10/44

(54) **VEHICLE CHARGING METHOD**

(30) Priority: 02.12.2022 CN 202211541794
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LI, Xin, Ningbo, Zhejiang 315899 (CN); WANG, Yang, Ningbo, Zhejiang 315899 (CN); ZHENG, Wei, Ningbo, Zhejiang 315899 (CN)
(74) Representative: Michalski Hüttermann & Partner Patentanwälte mbB
(86) International application number: PCT/CN2023/135183
(87) International publication number: WO 2024/114698

(57) **Abstract**

A vehicle charging method, a vehicle charging apparatus, an electronic device and a computer-readable storage medium which are applied to a charging management service platform including at least two parking spaces (A1, B3), where each of the at least two parking spaces is preset with a wireless charging coil, where the wireless charging coils preset in different parking spaces may be connected through one or more relay switches, and the vehicle charging method includes: obtaining a wireless charging request corresponding to a first vehicle parked in a first parking space (A1); and in response to the wireless charging request, determining a second parking space (B3) where a second vehicle satisfying a charging condition for the first vehicle is located, and turning on the relay switch of the one or more relay switches between a first wireless charging coil preset in the first parking space (A1) and a second wireless charging coil preset in the second parking space (B3) where the second vehicle is located, such that the second vehicle parked in the second parking space (B3) wirelessly charges the first vehicle through the second wireless charging coil. Therefore, quick and convenient charging can be provided for the first vehicle.

## Description

### TECHNICAL FIELD

One or more embodiments of the present disclosure relate to the field of electric vehicle technologies, and in particular, to a method and an apparatus for charging a vehicle based on a short-range wireless communication technology.

### BACKGROUND

With the development of new energy vehicles, pure electric vehicles have become an important part of this industry. Compared with the convenience of replenishing fuel for fuel vehicles, there are many problems in charging electric vehicles at present. For example, urban public charging piles are not uniformly laid out, and it is difficult to charge on highways on holidays; slow charging piles and fast charging piles on the market cannot be universal, etc.

With the increasing number of electric vehicles, the charging demand of the electric vehicles is increasing, and current charging methods based on charging piles obviously can't meet the charging demand of the electric vehicles.

### SUMMARY

In view of this, one or more embodiments of the present disclosure provide a vehicle charging method and a vehicle charging apparatus, to solve the problem in the related art.

To achieve the foregoing objective, according to one or more embodiments of the present disclosure, the following technical solutions are provided.

According to a first aspect of one or more embodiments of the present disclosure, a vehicle charging method is provided, which is applied to a charging management service platform managing at least two parking spaces, each of the at least two parking spaces is preset with a wireless charging coil, wireless charging coils preset in different parking spaces are connected through one or more relay switches, and the method includes:
obtaining a wireless charging request corresponding to a first vehicle parked in a first parking space; and
in response to the wireless charging request, determining a second parking space where a second vehicle satisfying a charging condition for the first vehicle is located, and turning on a relay switch of the one or more relay switches between a first wireless charging coil preset in the first parking space and a second wireless charging coil preset in the second parking space where the second vehicle is located, such that the second vehicle parked in the second parking space wirelessly charges the first vehicle through the second wireless charging coil.

Optionally, the obtaining the wireless charging request corresponding to the first vehicle includes:
obtaining the wireless charging request corresponding to the first vehicle sent by a first vehicle owner corresponding to the first vehicle parked in the first parking space through a client terminal.
obtaining a wireless charging request corresponding to a first vehicle parked in a first parking space;
obtaining an amount of power remaining in the first vehicle;
determining whether the amount of power remaining in the first vehicle is less than a preset threshold of remaining power; and
in response to determining that the amount of power remaining in the first vehicle is less than the preset threshold of remaining power, obtaining the wireless charging request corresponding to the first vehicle.

Optionally, the wireless charging request includes an identifier of the parking space corresponding to the first vehicle.

Optionally, the method further includes:
in response to the wireless charging request, generating charging demand information, and outputting the charging demand information to display through a client terminal.

Optionally, the charging demand information includes an amount of power to be charged for the first vehicle, a model of the first vehicle, and an identifier of the parking space where the first vehicle is located.

Optionally, outputting the charging demand information to display through the client terminal, includes:
determining a target vehicle that satisfies the charging condition for the first vehicle among vehicles parked in the parking spaces, and outputting the charging demand information to display through the client terminal, to enable an owner of the target vehicle to confirm the charging demand information.

Optionally, in response to the wireless charging request, determining the second parking space where the second vehicle satisfying the charging condition for the first vehicle is located, and turning on the relay switch of the one or more relay switches between the first wireless charging coil preset in the first parking space and the second wireless charging coil preset in the second parking space where the second vehicle is located, includes:
obtaining confirmed information for the charging demand information sent by a second vehicle owner corresponding to the second vehicle through the client terminal; and
in response to the confirmed information, turning on the relay switch of the one or more relay switches between the first wireless charging coil preset in the first parking space and the second wireless charging coils preset in the second parking space where the second vehicle is located.

Optionally, in response to the confirmed information, turning on the relay switch of the one or more relay switches between the first wireless charging coil preset in the first parking space and the second wireless charging coils preset in the second parking space where the second vehicle is located, includes:
determining whether the second vehicle satisfies the charging condition for the first vehicle; and in response to determining that the second vehicle satisfies the charging condition for the first vehicle, turning on the relay switch of the one or more relay switches between the first wireless charging coil preset in the first parking space and the second wireless charging coil preset in the second parking space where the second vehicle is located.

Optionally, in response to the wireless charging request, determining the second parking space where the second vehicle satisfying a charging condition for the first vehicle is located, and turning on the relay switch of the one or more relay switches between the first wireless charging coil preset in the first parking space and the second wireless charging coil preset in the second parking space where the second vehicle is located, such that the second vehicle parked in the second parking space wirelessly charges the first vehicle through the second wireless charging coil, includes:
in response to the wireless charging request, determining at least two second parking spaces where at least two second vehicles satisfying the charging condition for the first vehicle are located, and turning on the relay switch of the one or more relay switches between the first wireless charging coil preset in the first parking space and each of second wireless charging coils preset in the at least two second parking spaces where the second vehicles are located, to perform many-to-one wireless charging for the first vehicle through the second wireless charging coils using the at least two second vehicles.

Optionally, in response to the wireless charging request, determining the second parking space where the second vehicle satisfying a charging condition for the first vehicle is located, and turning on the relay switch of the one or more relay switches between the first wireless charging coil preset in the first parking space and the second wireless charging coil preset in the second parking space where the second vehicle is located, such that the second vehicle parked in the second parking space wirelessly charges the first vehicle through the second wireless charging coil, includes:
in response to the wireless charging request, determining a second parking space where the second vehicle satisfying charging conditions for at least two first vehicles is located, and turning on the relay switch of the one or more relay switches between each of first wireless charging coils preset in first parking spaces and the second wireless charging coil preset in the second parking space where the second vehicle is located, to perform one-to-many wireless charging for the at least two first vehicles through the second wireless charging coil using the second vehicle.

According to a second aspect of one or more embodiments of the present disclosure, a vehicle charging apparatus is provided, which is applied to a charging management service platform managing at least two parking spaces, each of the at least two parking spaces is preset with a wireless charging coil, wireless charging coils preset in different parking spaces are connected through one or more relay switches, and the apparatus includes:
a request obtaining unit, configured to obtain a wireless charging request corresponding to a first vehicle parked in a first parking space;
a wireless charging unit, configured to, in response to the wireless charging request, determine a second parking space where a second vehicle satisfying a charging condition for the first vehicle is located, and turn on a relay switch of the one or more relay switches between a first wireless charging coil preset in the first parking space and a second wireless charging coil preset in the second parking space where the second vehicle is located, such that the second vehicle parked in the second parking space wirelessly charges the first vehicle through the second wireless charging coil.

According to a third aspect of one or more embodiments of the present disclosure, an electronic device is provided, which includes:
a processor; and
a memory for storing processor-executable instructions.

The processor executes the processor-executable instructions to implement the method according to the first aspect.

According to a fourth aspect of one or more embodiments of the present disclosure, a computer-readable storage medium having computer instructions stored thereon is provided, when the instructions are executed by a processor, the steps of the method according to the first aspect are implemented.

The present disclosure has the following beneficial effects.

According to the present disclosure, the charging management service platform manages the parking spaces preset with the wireless charging coil, when the first vehicle in the parking space has a charging requirement, the wireless charging coil preset in the parking space where the second vehicle satisfying the charging condition is located and the wireless charging coil preset in the parking space where the first vehicle is located are connected, to charge the first vehicle quickly and conveniently.

### BRIEF DESCRIPTION OF DRAWINGS

FIG. 1 is a schematic diagram of a charging management service platform according to an exemplary embodiment.
FIG. 2 is a schematic diagram of controlling a relay switch between wireless charging coils according to an exemplary embodiment.
FIG. 3 is a schematic diagram of a principle for wireless charging based on wireless charging coils according to an exemplary embodiment.
FIG. 4 is a flowchart of a vehicle charging method according to an exemplary embodiment.
FIG. 5 is a schematic diagram of an electronic device according to an exemplary embodiment.
FIG. 6 is a block diagram of a vehicle charging apparatus according to an exemplary embodiment.

### DETAILED DESCRIPTION

Exemplary embodiments will be described in detail herein, examples of which are illustrated in the accompanying drawings. When the following descriptions involve the drawings, like numerals in different drawings refer to like or similar elements unless otherwise indicated. The implementations described in the following exemplary embodiments do not represent all implementations consistent with one or more embodiments of the present disclosure. Instead, they are merely examples of devices and methods consistent with some aspects of one or more embodiments of the present disclosure as detailed in appended claims.

It should be noted that, in other embodiments, the steps of the corresponding methods are not necessarily performed in the order shown and described in the present disclosure. In some other embodiments, the method may include more or fewer steps than the method described in the present disclosure. In addition, a single step described in the present disclosure may be divided into multiple steps for description in other embodiments, and multiple steps described in the present disclosure may also be combined into a single step for description in other embodiments.

With the development of new energy vehicles, pure electric vehicles have become an important part of this industry. Compared with the convenience of replenishing fuel for fuel vehicles, there are many problems in charging electric vehicles at present. For example, urban public charging piles are not uniformly laid out, and it is difficult to charge on highways on holidays; slow charging piles and fast charging piles on the market cannot be universal, etc.

With the increasing number of electric vehicles, the charging demand of the electric vehicles is increasing, and current charging methods based on charging piles obviously can't meet the charging demand of the electric vehicles.

In view of this, this application provides a technical solution for fast charging an electric vehicle based on a wireless charging coil.

During the implementation, the charging management service platform may obtain the wireless charging request corresponding to the first vehicle sent by a first vehicle owner corresponding to the first vehicle parked in the first parking space through a client terminal; and
in response to the wireless charging request, determine a second parking space where a second vehicle satisfying a charging condition for the first vehicle is located, and turn on the relay switch between a first wireless charging coil preset in the first parking space and a second wireless charging coil preset in the second parking space where the second vehicle is located, such that the second vehicle parked in the second parking space wirelessly charges the first vehicle through the second wireless charging coil.

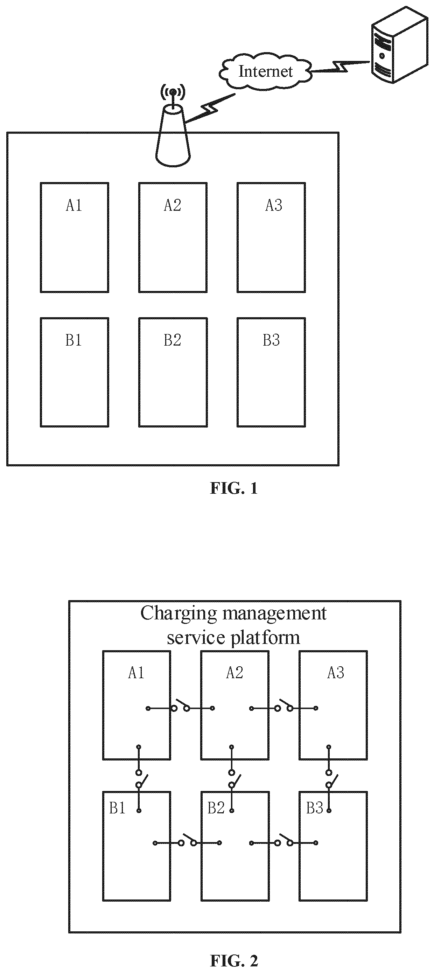

FIG. 1 is a schematic diagram of a charging management service platform according to an exemplary embodiment. As shown in FIG. 1, the charging management service platform may manage parking spaces A1, A2, and A3 and parking spaces B1, B2, and B3, where a wireless charging coil is preset in each of the parking spaces, and the wireless charging coil is configured to wirelessly charge a vehicle. The charging management service platform has a central control client terminal for receiving the wireless charging request of the first vehicle owner and the confirmed information of the second vehicle owner for the wireless charging request, and the central control client terminal may also be remotely connected to the server, for controlling the relay switches between the wireless charging coils.

FIG. 2 is a schematic diagram of controlling a relay switch between wireless charging coils according to an exemplary embodiment. As shown in FIG. 2, a relay switch is provided between every two parking spaces managed by the charging management service platform, and the relay switch may be remotely controlled to turn on or turn off by the server. It should be noted that FIG. 2 only shows a relay switch between adjacent parking spaces, and in practical applications, there is a relay switch between every two parking spaces. For example, there is also a relay switch between the parking space A1 and the parking space B3, and when the vehicle parked in the parking space B3 initiates a wireless charging request and the vehicle in the parking space A1 satisfies the wireless charging condition, the charging management service platform may control the relay between the wireless charging coil preset in the parking space B3 and the wireless charging coil preset in the parking space A1 to be turned on.

In an implementation, the relay switch includes a relay switch based on a logic circuit, the relay switch between the wireless charging coils can be controlled more safely and conveniently by using an AND-OR gate circuit in the logic circuit, and a relay switch formed by other logic circuits may also be used in practical applications, which is not specifically limited in the present disclosure.

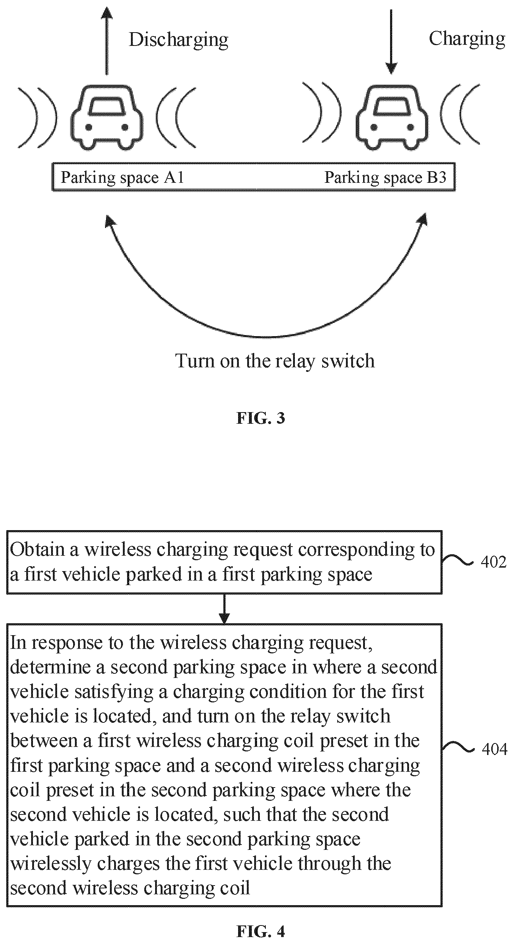

FIG. 3 is a schematic diagram of a principle for wireless charging based on wireless charging coils according to an exemplary embodiment. As shown in FIG. 3, when the vehicle parked in the parking space B3 initiates the wireless charging request, and the vehicle in the parking space A1 satisfies the wireless charging condition, the vehicle parked in the parking space A1 may transmit a magnetic field, so that the wireless charging coil preset in the parking space A1 receives a resonance to generate electric power, the electric power is transmitted to the wireless charging coil preset in the parking space B3, and the wireless charging coil preset in the parking space B3 may further transmit a magnetic field, so that the vehicle parked in the parking space B3 receives a resonance to obtain the electric power and to be charged.

FIG. 4 is a flowchart of a vehicle charging method according to an exemplary embodiment. As shown in FIG. 4, the method may include the following steps.

In step 402, a wireless charging request corresponding to a first vehicle parked in a first parking space is obtained.

In the present disclosure, the charging management service platform may obtain the wireless charging request corresponding to the first vehicle parked in the first parking space. Specifically, the charging management service platform may obtain the amount of power remaining in the first vehicle, and determine, based on the amount of power remaining in the first vehicle, whether wireless charging is required. The charging management service platform may preset a threshold of remaining power, and when the amount of power remaining in the first vehicle is lower than the preset threshold of remaining power, it may be defaulted that the first vehicle needs to be wirelessly charged, and the wireless charging request corresponding to the first vehicle parked in the first parking space is automatically obtained.

In an implementation, the charging management service platform may obtain the wireless charging request corresponding to the first vehicle sent by a first vehicle owner corresponding to the first vehicle parked in the first parking space through a client terminal.

A specific form of the client terminal is not limited, and in the present disclosure, the client terminal may be a central control system of the charging management service platform and configured to manage each parking space, and the first vehicle owner may directly enter a parking space identifier of the first parking space through the central control system, to send a wireless charging request corresponding to the first vehicle. The client terminal may also be a parking space client terminal corresponding to each parking space, and the specific form may be a console arranged at the position of the parking space, and the wireless charging request may be directly sent by the user through the console corresponding to the parking space. The client terminal may also be a mobile terminal of the user, such as operating systems of a mobile phone, a vehicle, etc., and through scanning a two-dimensional code corresponding to the parking space by the user, the wireless charging request may be sent to the charging management service platform; or through installing an application program corresponding to the charging management service platform, the wireless charging request may be sent to the charging management service platform by the application program.

In an implementation, the wireless charging request corresponding to the first vehicle sent by the first vehicle owner through the client terminal is obtained by the charging management service platform, and the charging management service platform may generate charging demand information of the wireless charging request, and output the charging demand information to display through the client terminal. The charging demand information may include an amount of power to be charged for the vehicle, a model of the vehicle, a parking space where the vehicle is located, etc.

The second vehicle owner whose vehicle satisfies the charging condition may view the charging demand information through the client terminal. For example, the charging demand information may be viewed through the central control system of the charging management service platform to determine the vehicles located in which parking spaces need to be charged. Alternatively, through the parking space client terminal corresponding to each parking space, it may be determined that vehicles located in which parking spaces need to be charged. Alternatively, through applications of the mobile terminal corresponding to the charging management service platform, it may be determined that the vehicles located in which parking spaces need to be charged.

In an implementation, the charging management service platform determines, among the vehicles located in the parking spaces, one or more target vehicles that satisfy the charging condition for the first vehicle. The charging condition may include that an amount of power remaining in the vehicle parked in each parking space exceeds a preset threshold and the vehicle has a wireless charging function. The preset threshold may be set based on the maximum capacity of the vehicle battery, for example, when the maximum capacity of the vehicle battery is not less than 50 AH, and the amount of power remaining in the vehicle is greater than 50% of the vehicle battery, it may be determined that the charging condition is satisfied; or when the maximum capacity of the vehicle battery is less than 50 AH, and the amount of power remaining in the vehicle is greater than 80% of the vehicle battery, it may be determined that the charging condition is satisfied.

After determining the target vehicle that satisfies the charging condition for the first vehicle among the vehicles parked in the parking spaces, the charging management service platform may output the charging demand information to display through the client terminal corresponding to the target vehicle, to enable an owner of the target vehicle to confirm the charging demand information.

In step 404, in response to the wireless charging request, a second parking space where a second vehicle satisfying a charging condition for the first vehicle is located is determined, and the relay switch between a first wireless charging coil preset in the first parking space and a second wireless charging coil preset in the second parking space where the second vehicle is located is turned on, such that the second vehicle parked in the second parking space wirelessly charges the first vehicle through the second wireless charging coil.

In the present disclosure, after that the charging management service platform obtains the wireless charging request corresponding to the first vehicle sent by the first vehicle owner through the client terminal, in response to the wireless charging request, it may be determined that the second parking space where a second vehicle satisfying a charging condition for the first vehicle is located, and the relay switch between the first wireless charging coil preset in the first parking space and the second wireless charging coil preset in the second parking space where the second vehicle is located is turned on, such that the second vehicle parked in the second parking space wirelessly charges the first vehicle through the second wireless charging coil.

For example, the first vehicle is parked in the parking space A1 by the first vehicle owner, and the charging management service platform determines that the second vehicle located in the parking space B3 satisfies the charging condition of the first vehicle. The charging management service platform may turn on the relay switch between the first wireless charging coil preset in the parking space A1 and the second wireless charging coil preset in the parking space B3, such that the second vehicle wirelessly charges the first vehicle through the second wireless charging coil.

In an implementation, the charging management service platform may further obtain confirmed information for the charging demand information sent by the second vehicle owner corresponding to the second vehicle parked in the second parking space through the client terminal. The second vehicle owner may, through the parking space client terminal corresponding to each parking space or the application of the mobile terminal corresponding to the charging management service platform, send the confirmed information for the charging demand information to the charging management service platform. The charging management service platform, in response to the confirmed information, turns on the relay switch between the first wireless charging coil preset in the first parking space and the second wireless charging coils preset in the second parking space where the second vehicle is located.

In an implementation, the charging management service platform may, after acquiring the confirmed information for the charging demand information sent by the second vehicle owner corresponding to the second vehicle parked in the second parking space through the client terminal, further determine whether the second vehicle parked in the second parking space satisfies the charging condition for the first vehicle; and if the second vehicle parked in the second parking space satisfies the charging condition for the first vehicle, the relay switch between the first wireless charging coil preset in the first parking space and the second wireless charging coil preset in the second parking space where the second vehicle is located is turned on. Whether the second vehicle satisfies the corresponding charging condition is further determined, to improve the safety of wireless charging.

In an implementation, there may be a plurality of second vehicles that satisfy the charging condition, and therefore the plurality of second vehicles may perform many-to-one charging for the same first vehicle. The charging management service platform, in response to the wireless charging request, determines at least two second parking spaces where at least two second vehicles satisfying the charging condition for the first vehicle are located, and turns on the relay switch between the first wireless charging coil preset in the first parking space and each of second wireless charging coils preset in second parking spaces where the second vehicles are located, to perform many-to-one wireless charging for the first vehicle through the second wireless charging coils using the at least two second vehicles.

In another implementation, there may also be a plurality of first vehicles initiating wireless charging requests, so the second vehicle may perform one-to-many charging for the plurality of first vehicles. The charging management service platform, in response to the wireless charging request, determines a second parking space where the second vehicle satisfying charging conditions for at least two first vehicles is located, and turns on the relay switch between each of first wireless charging coils preset in first parking spaces and the second wireless charging coil preset in the second parking space where the second vehicle is located, to perform one-to-many wireless charging for the first vehicles through the second wireless charging coil using the second vehicle parked in the second parking space.

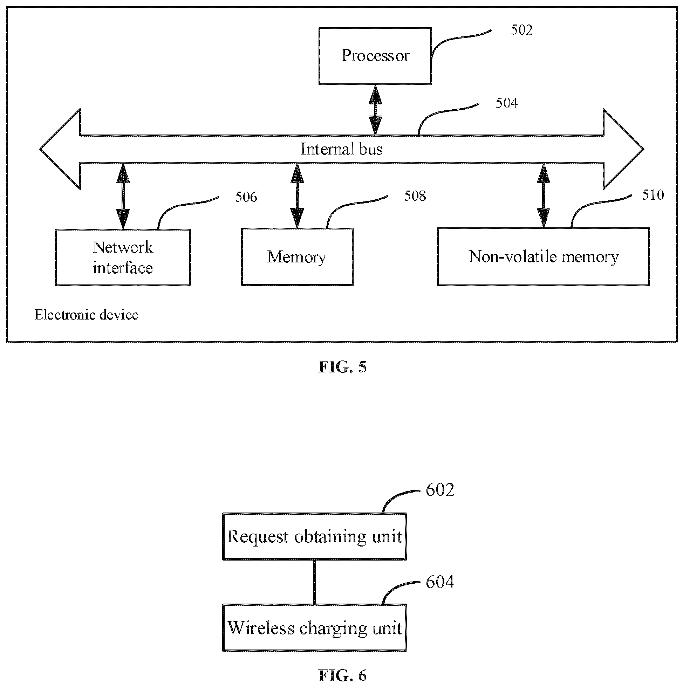

FIG. 5 is a schematic diagram of an electronic device according to an exemplary embodiment. Referring to FIG. 5, at the hardware level, the device includes a processor 502, an internal bus 504, a network interface 506, a memory 508, and a non-volatile memory 510, and certainly may further include the hardware required by other tasks. One or more embodiments of the present disclosure can be implemented based on the software, for example, the processor 502 reads a corresponding computer program from the non-volatile memory 510 into the memory 508 and then runs the computer program. Of course, in addition to the software implementations, one or more embodiments of the present disclosure do not exclude other embodiments, such as, a logic device or a combination of software and hardware, that is, an executing body of the following processing procedure is not limited to each logic unit, and may also be the hardware or the logic device.

Referring to FIG. 6, FIG. 6 is a vehicle charging apparatus, applied to a charging management service platform, where the charging management platform manages at least two parking spaces, each of the at least two parking spaces is preset with a wireless charging coil, wireless charging coils preset in different parking spaces are connected through a relay switch, and the apparatus includes:
a request obtaining unit 602, configured to obtain a wireless charging request corresponding to a first vehicle parked in a first parking space; and
a wireless charging unit 604, configured to, in response to the wireless charging request, determine a second parking space where a second vehicle satisfying a charging condition for the first vehicle is located, and turn on the relay switch between a first wireless charging coil preset in the first parking space and a second wireless charging coil preset in the second parking space where the second vehicle is located, such that the second vehicle parked in the second parking space wirelessly charges the first vehicle through the second wireless charging coil.

Optionally, obtaining the wireless charging request corresponding to the first vehicle parked in the first parking space, includes:
obtaining the wireless charging request corresponding to the first vehicle sent by a first vehicle owner corresponding to the first vehicle parked in the first parking space through a client terminal.

Optionally, the wireless charging unit is specifically configured to obtain confirmed information for the charging demand information sent by the second vehicle owner corresponding to the second vehicle parked in the second parking space through the client terminal; and
in response to the confirmed information, turn on the relay switch between the first wireless charging coil preset in the first parking space and the second wireless charging coils preset in the second parking space where the second vehicle is located.

Optionally, the wireless charging unit is specifically configured to determine whether the second vehicle parked in the second parking space satisfies the charging condition for the first vehicle; and in response to determining that the second vehicle satisfies the charging condition for the first vehicle, turn on the relay switch between the first wireless charging coil preset in the first parking space and the second wireless charging coil preset in the second parking space where the second vehicle is located.

Optionally, a wireless charging unit is specifically configured to, in response to the wireless charging request, determine at least two second parking spaces where at least two second vehicles satisfying the charging condition for the first vehicle are located, and turn on the relay switch between the first wireless charging coil preset in the first parking space and each of second wireless charging coils preset in second parking spaces where the second vehicles are located, to perform many-to-one wireless charging for the first vehicle through the second wireless charging coils using the at least two second vehicles.

Optionally, a wireless charging unit is configured to, in response to the wireless charging request, determine a second parking space where the second vehicle satisfying charging conditions for at least two first vehicles is located, and turn on the relay switch between each of first wireless charging coils preset in first parking spaces and the second wireless charging coil preset in the second parking space where the second vehicle is located, to perform one-to-many wireless charging for the first vehicles through the second wireless charging coil using the second vehicle parked in the second parking space.

The system, the apparatus, the module, or the unit illustrated in the aforementioned embodiments may be implemented by a computer chip or an entity, or may be implemented by a product having a certain function. A typical implementation device is a computer, and a specific form of the computer may be a personal computer, a laptop computer, a cellular phone, a camera phone, a smartphone, a personal digital assistant, a media player, a navigation device, an email receiving and sending device, a game console, a tablet computer, a wearable device, or any combination of these devices.

In a typical configuration, a computer includes one or more processors (CPU), an input/output interface, a network interface, and a memory.

The memory may include a computer-readable medium, such as a volatile memory, a random-access memory (RAM), and/or a non-volatile memory, for example, a read-only memory (ROM) or a flash RAM. Memory is an example of the computer-readable medium.

Computer-readable medium includes both permanent and non-permanent, removable and non-removable mediums and can implement information storage through any method or technology. The information may be computer-readable instructions, data structures, modules of a program, or other data. Examples of computer storage medium include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disc read-only memory (CD- ROM), a digital versatile disc (DVD) or other optical storage, a cassette tape, magnetic disk storage, a quantum memory, a graphene-based storage medium or other magnetic storage devices, or any other non-transmission medium, which can be used to store information that can be accessed by a computing device. As defined herein, the computer-readable medium does not include temporary storage of computer-readable medium (transitory media), such as modulated data signals and carrier waves.

It should also be noted that the terms "include", "comprise" or any other variations thereof are intended to cover non-exclusive inclusion, so that a process, a method, a product or a device including a series of elements includes not only those elements, but also other elements not explicitly listed, or elements inherent to such the process, the method, the product or the device. An element limited by "comprises a..." does not, without further limitation, exclude the existence of additional identical elements in the process, the method, the article, or the device that comprises this element.

Specific embodiments of the present disclosure have been described above. Other embodiments are within the scope of appended claims. In some cases, the actions or steps described in claims may be performed in an order different from that in the embodiments, and the desired results may still be achieved. In addition, the particular order or the sequential order of the processes described in the accompanying drawings are not necessarily required to achieve the desirable result. In certain implementations, multitasking processing and parallel processing may also be advantageous.

Terms used in one or more embodiments of the present disclosure are merely intended to describe specific embodiments, but are not intended to limit the one or more embodiments of the present disclosure. As used in the embodiments of the present disclosure and appended claims, the singular forms "a", "said" and "the" are intended to include the plural forms as well, unless the context clearly dictates otherwise. It should also be understood that the term "and/or" used herein includes any and all possible combinations of one or more of the associated listed items.

It should be understood that although terms such as first, second, and third may be used in one or more embodiments of the present disclosure to describe various information, the information should not be limited to these terms. These terms are only used to distinguish information of the same category with each other. For example, without departing from the scope of one or more embodiments of the present disclosure, the first information may also be referred to as the second information, and similarly, the second information may also be referred to as the first information. Depending on the context, the word "if" as used herein may be interpreted as "when" or "upon" or "in response to determining".

The above description is only one or more preferred embodiment of the present disclosure and is not intended to limit the present disclosure, and any modifications, equivalent replacements, or improvements made within the spirit and the principle of one or more embodiments of the present disclosure shall fall within the protection scope of the one or more embodiments of the present disclosure.

## Claims

1. A vehicle charging method, applied to a charging management service platform managing at least two parking spaces, wherein each of the at least two parking spaces is preset with a wireless charging coil, wherein wireless charging coils preset in different parking spaces are connected through one or more relay switches, and the method comprises:
obtaining a wireless charging request corresponding to a first vehicle parked in a first parking space; and
in response to the wireless charging request, determining a second parking space where a second vehicle satisfying a charging condition for the first vehicle is located, and turning on a relay switch of the one or more relay switches between a first wireless charging coil preset in the first parking space and a second wireless charging coil preset in the second parking space where the second vehicle is located, such that the second vehicle parked in the second parking space wirelessly charges the first vehicle through the second wireless charging coil.

2. The method of claim 1, wherein obtaining the wireless charging request corresponding to the first vehicle parked in the first parking space, comprises:
obtaining the wireless charging request corresponding to the first vehicle sent by a first vehicle owner corresponding to the first vehicle through a client terminal.

3. The method of claim 1, wherein obtaining the wireless charging request corresponding to the first vehicle parked in the first parking space, comprises:
obtaining an amount of power remaining in the first vehicle;
determining whether the amount of power remaining in the first vehicle is less than a preset threshold of remaining power; and
in response to determining that the amount of power remaining in the first vehicle is less than the preset threshold of remaining power, obtaining the wireless charging request corresponding to the first vehicle.

4. The method of claim 1, wherein the wireless charging request comprises an identifier of the parking space corresponding to the first vehicle.

5. The method of claim 1, further comprising:
in response to the wireless charging request, generating charging demand information, and outputting the charging demand information to display through a client terminal.

6. The method of claim 5, wherein the charging demand information comprises an amount of power to be charged for the first vehicle, a model of the first vehicle, and an identifier of the parking space where the first vehicle is located.

7. The method of claim 5, wherein outputting the charging demand information to display through the client terminal, comprises:
determining a target vehicle that satisfies the charging condition for the first vehicle among vehicles parked in the parking spaces, and outputting the charging demand information to display through the client terminal, to enable an owner of the target vehicle to confirm the charging demand information.

8. The method of claim 5, wherein in response to the wireless charging request, determining the second parking space where the second vehicle satisfying the charging condition for the first vehicle is located, and turning on the relay switch of the one or more relay switches between the first wireless charging coil preset in the first parking space and the second wireless charging coil preset in the second parking space where the second vehicle is located, comprises:
obtaining confirmed information for the charging demand information sent by a second vehicle owner corresponding to the second vehicle through the client terminal; and
in response to the confirmed information, turning on the relay switch of the one or more relay switches between the first wireless charging coil preset in the first parking space and the second wireless charging coil preset in the second parking space where the second vehicle is located.

9. The method of claim 8, wherein in response to the confirmed information, turning on the relay switch of the one or more relay switches between the first wireless charging coil preset in the first parking space and the second wireless charging coil preset in the second parking space where the second vehicle is located, comprises:
determining whether the second vehicle satisfies the charging condition for the first vehicle; and in response to determining that the second vehicle satisfies the charging condition for the first vehicle, turning on the relay switch of the one or more relay switches between the first wireless charging coil preset in the first parking space and the second wireless charging coil preset in the second parking space where the second vehicle is located.

10. The method of claim 1, wherein in response to the wireless charging request, determining the second parking space where the second vehicle satisfying the charging condition for the first vehicle is located, and turning on the relay switch of the one or more relay switches between the first wireless charging coil preset in the first parking space and the second wireless charging coil preset in the second parking space where the second vehicle is located, such that the second vehicle parked in the second parking space wirelessly charges the first vehicle through the second wireless charging coil, comprises:
in response to the wireless charging request, determining at least two second parking spaces where at least two second vehicles satisfying the charging condition for the first vehicle are located, and turning on the relay switch of the one or more relay switches between the first wireless charging coil preset in the first parking space and each of second wireless charging coils preset in the at least two second parking spaces where the second vehicles are located, to perform many-to-one wireless charging for the first vehicle through the second wireless charging coils using the at least two second vehicles.

11. The method of claim 1, wherein in response to the wireless charging request, determining the second parking space where the second vehicle satisfying the charging condition for the first vehicle is located, and turning on the relay switch of the one or more relay switches between the first wireless charging coil preset in the first parking space and the second wireless charging coil preset in the second parking space where the second vehicle is located, such that the second vehicle parked in the second parking space wirelessly charges the first vehicle through the second wireless charging coil, comprises:
in response to the wireless charging request, determining a second parking space where the second vehicle satisfying charging conditions for at least two first vehicles is located, and turning on the relay switch of the one or more relay switches between each of first wireless charging coils preset in first parking spaces and the second wireless charging coil preset in the second parking space where the second vehicle is located, to perform one-to-many wireless charging for the at least two first vehicles through the second wireless charging coil using the second vehicle.

12. A vehicle charging apparatus, applied to a charging management service platform managing at least two parking spaces, wherein each of the at least two parking spaces is preset with a wireless charging coil, wherein the wireless charging coils preset in different parking spaces are connected through one or more relay switches, and the apparatus comprises:
a request obtaining unit, configured to obtain a wireless charging request corresponding to a first vehicle parked in a first parking space; and
a wireless charging unit, configured to, in response to the wireless charging request, determine a second parking space where a second vehicle satisfying a charging condition for the first vehicle is located, and turn on a relay switch of the one or more relay switches between a first wireless charging coil preset in the first parking space and a second wireless charging coil preset in the second parking space where the second vehicle is located, such that the second vehicle parked in the second parking space wirelessly charges the first vehicle through the second wireless charging coil.

13. An electronic device, comprising:
a processor; and
a memory for storing processor-executable instructions;
wherein the processor executes the processor-executable instructions to implement the method according to any one of claims 1 to 11.

14. A computer-readable storage medium, having computer instructions stored thereon, wherein, when the instructions are executed by a processor, the instructions implement the method according to any one of claims 1 to 11.
